# EUROPEAN PATENT SPECIFICATION

(11) **EP 4 332 838 B1**
(45) Date of publication and mention of the grant of the patent: **24.12.2025**
(21) Application number: 23794709.8
(22) Date of filing: 18.02.2023
(51) Int. Cl.: G06N 5/02, G06F 8/36, G06N 5/022, G06Q 10/0875, G06Q 10/10, G06Q 30/0601

(54) **METHOD AND APPARATUS FOR CREATING CONFIGURATION KNOWLEDGE BASE, AND RELATED DEVICE**
VERFAHREN UND VORRICHTUNG ZUR ERZEUGUNG EINER KONFIGURATIONSWISSENSBASIS UND ZUGEHÖRIGE VORRICHTUNG
PROCÉDÉ ET APPAREIL DE CRÉATION D'UNE BASE DE CONNAISSANCES DE CONFIGURATION, ET DISPOSITIF ASSOCIÉ

(30) Priority: 25.04.2022 CN 202210443273
(43) Date of publication of application: 06.03.2024
(73) Proprietor: Huawei Technologies Co., Ltd., Shenzhen, Guangdong 518129 (CN)
(72) Inventor: WANG, Fei, Shenzhen, Guangdong 518129 (CN); FAN, Jun, Shenzhen, Guangdong 518129 (CN); JIN, Liangfeng, Shenzhen, Guangdong 518129 (CN); JIN, Zhipei, Shenzhen, Guangdong 518129 (CN); YANG, Zhao, Shenzhen, Guangdong 518129 (CN); FU, Yang, Shenzhen, Guangdong 518129 (CN)
(74) Representative: MERH-IP Matias Erny Reichl Hoffmann Patentanwälte PartG mbB
(86) International application number: PCT/CN2023/077016
(87) International publication number: WO 2023/207273

(56) References cited:
- CN-A- 101 082 966
- CN-A- 101 458 732
- CN-A- 113 039 566
- JP-A- 2000 339 381
- US-A- 4 591 983
- US-A- 4 591 983
- US-A1- 2010 121 806
- MANDOLINI MARCO ET AL: "A standard data model for life cycle analysis of industrial products: A support for eco-design initiatives", vol. 109, 1 August 2019 (2019-08-01), AMSTERDAM, NL, pages 31 - 44, XP093190918, ISSN: 0166-3615, Retrieved from the Internet <URL:https://pdf.sciencedirectassets.com/271439/1-s2.0-S0166361519X00044/1-s2.0-S0166361518307449/main.pdf?X-Amz-Security-Token=IQoJb3JpZ2luX2VjEFkaCXVzLWVhc3QtMSJIMEYCIQDs8EOwy3rkeJHUgoYy73cYtawk6RdqS5G6EbJlLnzmmQIhAITHcOhbR79wvXXrBqZ+RIuRI+1LemppBpOnsv0ycvVYKrMFCEIQBRoMMDU5MDAzNTQ2ODY1Igy+6o8KH9VU0zsSy> [retrieved on 20240729], DOI: 10.1016/j.compind.2019.04.008

## Description

### TECHNICAL FIELD

This application relates to the field of computer technologies, and in particular, to a method and an apparatus for creating a configuration knowledge base, and a related device.

### BACKGROUND

Product configuration is a process of combining modules in a configurable product to meet user requirements and finally obtaining a customer's desirable individual product. The product configuration is usually completed using a product configuration system. A product configuration system or application software that implements product configuration is referred to as a configurator.

After research and development for a product family is completed, a knowledge base is created for each module included in the product family, and a relationship between modules in the product family is modeled. That is, a configuration knowledge base corresponding to the product family is created. During product configuration, the configurator can load knowledge packages of modules included in a product from the configuration knowledge base depending on customer requirements, and combine the modules to obtain the product that meets the customer requirements. Therefore, how to efficiently and simply create a configuration knowledge base of a product family is an important problem in the field of product configuration.
Document US 4 591 983 generally relates to inventory control and the processing of orders for flexibly assembled systems or items of manufacture, and more specifically to computer systems to aid in the checking of orders for products or systems to be manufactured or assembled.

### SUMMARY

This application provides a method and an apparatus for creating a configuration knowledge base, and a related device. Different product families can reuse a knowledge package of a same module, so that a configuration knowledge base of a product family can be simply and efficiently created, thereby improving efficiency of creating the configuration knowledge base. In particular, this application provides a method for creating a configuration knowledge base, a corresponding apparatus, and a computer-readable storage medium, having the features of respective independent claims. The dependent claims relate to preferred embodiments.

According to a first aspect, this application provides a method for creating and applying a configuration knowledge base. The creation method includes: determining a hierarchical structure relationship between modules based on a plurality of modules in a product family, where the hierarchical structure relationship indicates a hierarchical relationship between a parent module and a child module in the plurality of modules, and each parent module includes one or more child modules; determining a knowledge package of each module based on the hierarchical structure relationship; and releasing the knowledge package of each module included in the product family to a configuration knowledge base, to obtain a configuration knowledge base of the product family. A knowledge package of one parent module includes an input interface algorithm of the child module associated with the parent module. The input interface algorithm of the child module needs to be triggered and executed by another module. After the input interface algorithm of the child module is executed, a part of a configuration result of the child module is obtained.

Execution of the input interface algorithm of the child module is related to another module. The input interface algorithm of the child module is written into the knowledge package of the parent module associated with the child module, so that another algorithm in the knowledge package of the child module is unrelated to the parent module. When there is a same child module in different products, a knowledge package of the child module in one product can reuse a knowledge package of the child module in another product, so that the configuration knowledge base of the product family can be simply and efficiently created, thereby improving efficiency.

It should be noted that, a hierarchical structure includes a plurality of layers, and each layer includes one or more modules. The parent module and the child module are relative concepts. When a module has an upper-layer module associated with the module, the upper-layer module associated with the module is a parent module of the module, and the module is a child module of the upper-layer module associated with the module. When the module has an associated lower-layer module, the lower-layer module associated with the module is a child module of the module, and the module is a parent module of the lower-layer module associated with the module.

In a possible implementation, the execution of the input interface algorithm of the child module is triggered by the parent module. During execution, a part of the configuration result of the child module is obtained based on a configuration result of the parent module.

The execution of the input interface algorithm of the child module is triggered by the parent module, and an execution result is related to the configuration result of the parent module associated with the child module. The execution of the input interface algorithm of the child module is triggered and the corresponding execution result is obtained only when the configuration result of the parent module is determined. Therefore, the input interface algorithm of the child module is written into the knowledge package of the parent module. In this way, when another product also includes the child module, but parent modules of the child module are different, that is, when a trigger condition of the input interface algorithm of the child module in the another product varies, because the knowledge package of the input interface algorithm of the child module is written into the knowledge package of the corresponding parent module, another algorithm in the knowledge package of the child module is unrelated to the parent module of the child module in a current product. Therefore, a configuration knowledge base of the another product can reuse the knowledge package of the child module.

In a possible implementation, the execution of the input interface algorithm of the child module is triggered by a front sibling module of the child module, and a part of the configuration result of the child module is obtained based on a configuration result of the front sibling module. The child module and the front sibling module of the child module belong to a same layer in the foregoing hierarchical structure, and the child module and the front sibling module of the child module are associated with a same parent module. A change of the configuration result of the front sibling module of the child module may cause a change of the configuration result of the child module.

The execution of the input interface algorithm of the child module is triggered by the front sibling module of the child module, and the execution result is related to the configuration result of the front sibling module. The execution of the input interface algorithm of the child module is triggered and the corresponding execution result is obtained only when the configuration result of the front sibling module is determined. Therefore, the input interface algorithm of the child module is written into the knowledge package of the parent module of the child module. In this way, when the another product also includes the child module, but front sibling modules in the child module are different, that is, when the trigger condition of the input interface algorithm of the child module in the another product varies, because the knowledge package of the input interface algorithm of the child module is written into the knowledge package of the corresponding parent module, another algorithm in the knowledge package of the child module is unrelated to a front sibling module of the child module in the current product. Therefore, the configuration knowledge base of the another product can reuse the knowledge package of the child module.

In a possible implementation, the knowledge package of the parent module further includes an internal algorithm of the parent module, and a part of a configuration result of the parent module is obtained after the internal algorithm of the parent module is executed.

The knowledge package of the parent module further includes the internal algorithm. The execution of the internal algorithm is not directly related to another module associated with the parent module, and an execution result of the internal algorithm is a part of the configuration result of the parent module. Because the parent module may also be a child module of another module or has a front sibling module, the parent module may have an input interface algorithm, and an execution result of the input interface algorithm is another part of the configuration result of the parent module. An algorithm of one module is divided into an input interface algorithm and an internal algorithm, so that an input interface algorithm associated with another module is written into a parent module of the module, to achieve the reuse purpose.

In a possible implementation, the knowledge package of the parent module further includes a statistical set of the parent module and an output interface algorithm of the parent module. The statistical set includes one or more statistical items. The output interface algorithm is used to collect statistics on statistical data of each statistical item of the configuration result of the parent module. The statistical item includes any one or more of the following: a price, a weight, or a volume.

The configuration result of the parent module can be obtained after the output interface algorithm and the input interface algorithm of the parent module are executed. Then, the output interface algorithm is executed to collect statistics on various pieces of data of the parent module in the configuration result, so that the statistical data can be presented to a user, or final statistical data of the entire product can be determined and presented to the user, so that the user can further confirm, based on the statistical data, whether the configuration result of the product is appropriate.

In a possible implementation, the knowledge package of the parent module further includes a component set of the parent module, the component set includes one or more components, and each component includes one or more optional objects of the parent module. An execution result of the input interface algorithm of the parent module and the internal algorithm of the parent module is the configuration result of the parent module. The configuration result includes one object of each component. The input interface algorithm of the parent module belongs to a knowledge package of a parent module associated with the parent module.

In a possible implementation, before the knowledge package of each module included in the product family is released to the configuration knowledge base, the knowledge package of the product family further needs to be configured, which specifically includes: obtaining a plurality of user requirements; executing, based on each user requirement and the knowledge package of each module included in the product family, an algorithm included in the knowledge package of each module, to obtain a plurality of products, where each user requirement corresponds to one or more specific products; or when a result indicating that no product meets the user requirement is returned, confirming that the foregoing hierarchical structure relationship and the knowledge package of each module are correctly constructed; and releasing the knowledge package of each module included in the product family to the configuration knowledge base.

In a possible implementation, after the configuration knowledge base of the product family is created, product configuration can be performed based on the user requirement and in combination with the configuration knowledge base of the product family, to obtain a product that meets the user requirement. Specifically, the user requirement of the user for the product is obtained, and the knowledge package of each module in the product is obtained from the configuration knowledge base. An algorithm of each module is executed based on the user requirement and the knowledge package of each module, to determine a configuration result of each module that meets the user requirement. An algorithm of one module includes an input interface algorithm, an internal algorithm, and an output interface algorithm of the module.

In a possible implementation, in a construction state, that is, when the knowledge package of each module is constructed, a knowledge package of one parent module includes an input interface algorithm of a child module associated with the parent module, an internal algorithm of the parent module, and an output interface algorithm of the parent module. An algorithm of one parent module includes an input interface algorithm of the parent module, an internal algorithm of the parent module, and an output interface algorithm of the parent module. In a running state, that is, when the product is configured based on the knowledge package of each module, when an algorithm of one parent module is executed, an input interface algorithm of the parent module is first executed, then an internal algorithm of the parent module is executed, an algorithm of each child module of the parent module is next executed, and an output interface algorithm of the parent module is finally executed.

Through separation of the construction state and the running state, if different products or different product families include a same module, for example, a desktop computer and an all-in-one computer both include processors, but trigger conditions of an input interface algorithm of the module in the different product families are different, the input interface algorithm of the module is written into knowledge packages of upper-layer parent modules corresponding to the module in different product families. In this way, an execution result of another algorithm in the knowledge package of the module is unrelated to a parent module of the module. Therefore, the knowledge package of the module can be reused. That is, when different product families have a same module, only a data package of the module needs to be created when a configuration knowledge base of one product family is created, and the knowledge package of the module does not need to be created again when a configuration knowledge base of another product family is created. In addition, through the separation of the construction state and the running state, when maintaining a data package of one module, for example, modifying an optional configuration of an optional feature of the module, maintenance personnel do not need to pay attention to logic of invoking the module by different product families, so that a problem that invoking the module by a product family is damaged after the modification can be avoided.

In a possible implementation, after the internal algorithm of the parent module is executed, if the parent module includes a plurality of child modules, a topology sequence of executing respective algorithms by the child modules needs to be first determined. The topology sequence indicates a sequence in which the plurality of child modules of the parent module execute the respective algorithms. A front sibling module of a child module first executes an algorithm of the front sibling module before the child module, then executes an algorithm of the child module, and next executes an algorithm of a rear sibling module of the child module. The rear sibling module of the child module and the child module are located at a same layer, and a modification of a configuration result of the child module may cause a change of a configuration result of the rear sibling module of the child module.

It should be understood that the child module may also be a parent module of another module in the hierarchical structure, that is, the child module may also include one or more child modules. In this case, when the algorithm of the child module is executed, the child module may be considered as a parent module, and the algorithm of the child module is executed according to the foregoing method for executing the algorithm of the parent module.

In a possible implementation, after the output interface algorithm of the parent module is executed, if the parent module corresponds to a plurality of rear sibling modules, a topology sequence of the rear sibling modules is further determined, and algorithms of the rear sibling modules are sequentially executed. It should be understood that a rear sibling module of the parent module may also be a parent module of another module in the hierarchical structure, and the rear sibling module may also include one or more child modules. In this case, when an algorithm of the rear sibling module is executed, the rear sibling module may be considered as the parent module, and the algorithm of the rear sibling module is executed according to the foregoing method for executing the algorithm of the parent module.

In a possible implementation, if the user modifies the configuration result of the parent module, the internal algorithm of the parent module is first executed to obtain a new configuration result corresponding to the parent module. Then, the algorithm of the child module of the parent module is executed based on the topology sequence. For a child module of the parent module, a previous execution result of an input interface algorithm of the child module is stored before the input interface algorithm of the child module is executed. Next, the input interface algorithm of the child module is executed to obtain a current execution result of executing the input interface algorithm of the child module. The current execution result is compared with the previous execution result. When the current execution result is the same as the previous execution result, execution of an internal algorithm of the child module, an algorithm of a child module of the child module, and an output interface algorithm of the child module is skipped, and an algorithm of a rear sibling module of the child module is executed. According to the foregoing method, a calculation amount can be reduced, a feedback speed of performing product configuration can be increased, and user experience can be improved.

In a possible implementation, after the configuration result of the parent module is modified, if the parent module further has a rear sibling module, after the algorithm of the parent module is executed, an algorithm of the rear sibling module of the parent module is executed. For a rear sibling module of the parent module, before an input interface algorithm of the rear sibling module is executed, a previous execution result of the input interface algorithm of the rear sibling module is stored, then the input interface algorithm of the rear sibling module is executed to obtain a current execution result of executing the input interface algorithm of the rear sibling module, and the current execution result is compared with the previous execution result. When the current execution result is the same as the previous execution result, an internal algorithm of the rear sibling module, an algorithm of a child module of the rear sibling module, and an output interface algorithm of the rear sibling module are not executed.

According to a second aspect, this application provides an apparatus for creating a configuration knowledge base. The apparatus includes:
a processing unit, configured to: determine a hierarchical structure relationship between a plurality of modules based on a product family, where the hierarchical structure relationship indicates a hierarchical relationship between a parent module and a child module in the plurality of modules, and each parent module includes one or more child modules; and
determine a knowledge package of each of the plurality of modules based on the hierarchical structure relationship, where a knowledge package of the parent module includes an input interface algorithm of the child module associated with the parent module; and
a release unit, configured to release the knowledge package of each module included in the product family to a configuration knowledge base, to obtain a configuration knowledge base of the product family.

In a possible implementation, execution of the input interface algorithm of the child module is triggered by the parent module. During execution, a part of a configuration result of the child module is obtained based on a configuration result of the parent module.

In a possible implementation, execution of the input interface algorithm of the child module is triggered by a front sibling module of the child module, and a part of a configuration result of the child module is obtained based on a configuration result of the front sibling module. The child module and the front sibling module of the child module belong to a same layer in a hierarchical structure, and the child module and the front sibling module of the child module are associated with a same parent module. A change of the configuration result of the front sibling module of the child module may cause a change of the configuration result of the child module.

In a possible implementation, the knowledge package of the parent module further includes an internal algorithm of the parent module, and a part of the configuration result of the parent module is obtained after the internal algorithm of the parent module is executed.

In a possible implementation, the knowledge package of the parent module further includes a statistical set of the parent module and an output interface algorithm of the parent module. The statistical set includes one or more statistical items. The output interface algorithm is used to collect statistics on statistical data of each statistical item of the configuration result of the parent module. The statistical item includes any one or more of the following: a price, a weight, or a volume.

In a possible implementation, the knowledge package of the parent module further includes a component set of the parent module, the component set includes one or more components, and each component includes one or more optional objects of the parent module. An execution result of the input interface algorithm of the parent module and the internal algorithm of the parent module is the configuration result of the parent module. The configuration result includes one object of each component. The input interface algorithm of the parent module belongs to a knowledge package of a parent module associated with the parent module.

In a possible implementation, before the knowledge package of each module included in the product family is released to the configuration knowledge base, the knowledge package of the product family further needs to be configured. The processing unit is further configured to: obtain a plurality of user requirements; execute, based on each user requirement and the knowledge package of each module included in the product family, an algorithm included in the knowledge package of each module, to obtain a plurality of products, where each user requirement corresponds to one or more specific products; or when a result indicating that no product meets the user requirement is returned, confirm that the foregoing hierarchical structure relationship and the knowledge package of each module are correctly constructed; and release the knowledge package of each module included in the product family to the configuration knowledge base.

In a possible implementation, after the configuration knowledge base of the product family is created, product configuration can be performed based on the user requirement and in combination with the configuration knowledge base of the product family, to obtain a product that meets the user requirement. The processing unit is further configured to: obtain the user requirement of the user for the product, and obtain the knowledge package of each module in the product from the configuration knowledge base; and execute an algorithm of each module based on the user requirement and the knowledge package of each module, to determine a configuration result of each module that meets the user requirement. An algorithm of one module includes an input interface algorithm, an internal algorithm, and an output interface algorithm of the module.

In a possible implementation, if the user modifies the configuration result of the parent module, the internal algorithm of the parent module is first executed to obtain a new configuration result corresponding to the parent module. Then, before the input interface algorithm of the child module of the parent module is executed, a previous execution result of the input interface algorithm of the child module is stored. Next, the input interface algorithm of the child module is executed, to obtain a current execution result of executing the input interface algorithm of the child module. The current execution result is compared with the previous execution result. When the current execution result is the same as the previous execution result, execution of an internal algorithm of the child module, an algorithm of a child module of the child module, and an output interface algorithm of the child module is skipped, and an algorithm of a rear sibling module of the child module is executed.

According to a third aspect, this application provides a computing device. The computing device includes a processor and a memory, the memory stores computer program instructions, and the processor executes the computer program instructions to implement the operation method according to any one of the first aspect or the possible implementations of the first aspect.

According to a fourth aspect, this application provides a computer program product. When the computer program product runs on a server, the server is enabled to perform the operation steps of the method according to any one of the first aspect or the possible implementations of the first aspect.

According to a fifth aspect, this application further provides a configurator. The configurator is software running in a computing device, a cloud service, or a client. A user may perform, through the configurator, the operation steps of the method according to any one of the first aspect or the possible implementations of the first aspect.

According to a sixth aspect, this application provides a computer-readable storage medium. The computer-readable storage medium stores instructions, and when the instructions are run on a server, the server is enabled to perform the operation steps of the method according to any one of the first aspect or the possible implementations of the first aspect.

In this application, on the basis of the implementations provided in the foregoing aspects, the implementations may be further combined to provide more implementations.

### BRIEF DESCRIPTION OF DRAWINGS

FIG. 1 is an architectural diagram of a configuration system according to an embodiment of this application;
FIG. 2 is a schematic flowchart of a method for creating a configuration knowledge base according to an embodiment of this application;
FIG. 3 is a schematic diagram of a hierarchical structure according to an embodiment of this application;
FIG. 4 is a schematic diagram of a hierarchical structure corresponding to an all-in-one computer according to an embodiment of this application;
FIG. 5 is a schematic diagram of a relationship between a hierarchical structure and an interface algorithm of each module of a desktop computer according to an embodiment of this application;
FIG. 6 is a schematic diagram of a relationship between a hierarchical structure and an interface algorithm of each module of an all-in-one computer according to an embodiment of this application;
FIG. 7 is a schematic diagram of a method for performing product configuration by applying a configuration knowledge base according to an embodiment of this application;
FIG. 8 is a schematic diagram of an apparatus for creating a configuration knowledge base according to an embodiment of this application; and
FIG. 9 is a schematic diagram of a structure of a computing device according to an embodiment of this application.

### DESCRIPTION OF EMBODIMENTS

Product configuration is always one of core technologies of mass customization. A basic idea of the mass customization is to reduce internal diversity of a product by using methods such as standardization and modularization based on a similarity and universality of product components and product structures. In addition, to meet differentiated requirements of different customers, diverse products are provided to users by using methods, for example, assembly of different modules in the product. The foregoing process needs to be completed through a configurator. In a process of product configuration, the configurator needs to obtain a configuration knowledge base corresponding to the product. The configuration knowledge base includes a knowledge package of each module included in the product. The knowledge package of each module includes various optional configurations of the module and an invocation relationship between the module and another module. The configurator can configure, based on the knowledge package of each module and the invocation relationship between modules, a product that meets a user requirement. Therefore, how to simply and efficiently create a configuration knowledge base corresponding to a product is of great significance to creation and maintenance of the configuration knowledge base for the product. Therefore, how to quickly construct a configuration knowledge base is of great significance to the product configuration.

Embodiments of this application provide a method for creating a configuration knowledge base. In the method, a hierarchical structure relationship between a plurality of modules included in a product family is first constructed based on the modules. A hierarchical structure includes a plurality of layers, and each layer includes one or more modules. The hierarchical structure relationship indicates a hierarchical relationship between a parent module and a child module in the plurality of modules. Each parent module includes one or more child modules. The parent module and the child module are relative concepts. When a module has an upper-layer module associated with the module, the upper-layer module associated with the module is a parent module of the module, and the module is a child module of the upper-layer module associated with the module. When the module has an associated lower-layer module, the lower-layer module associated with the module is a child module of the module, and the module is a parent module of the lower-layer module associated with the module. After the hierarchical structure relationship between the modules is constructed, a knowledge package of each module is determined based on the hierarchical structure relationship; and then the knowledge package of each module included in the product family is released to a configuration knowledge base to obtain a configuration knowledge base of the product family. A knowledge package of one parent module includes an input interface algorithm of a child module associated with the parent module. The input interface algorithm of the child module refers to an algorithm whose execution needs to be triggered by another module. After the input interface algorithm of the child module is executed, a part of a configuration result of the child module is obtained. Execution of the input interface algorithm of the child module is related to the parent module associated with the child module. The input interface algorithm of the child module is written into the knowledge package of the parent module associated with the child module, so that another algorithm in the knowledge package of the child module is unrelated to the parent module of the child module. When the child module exists in different products, a knowledge package of the child module in another product can reuse the knowledge package of the child module in the product, so that the configuration knowledge base of the product family can be simply and efficiently created, thereby improving efficiency.

The following describes technical solutions of this application with reference to the accompanying drawings.

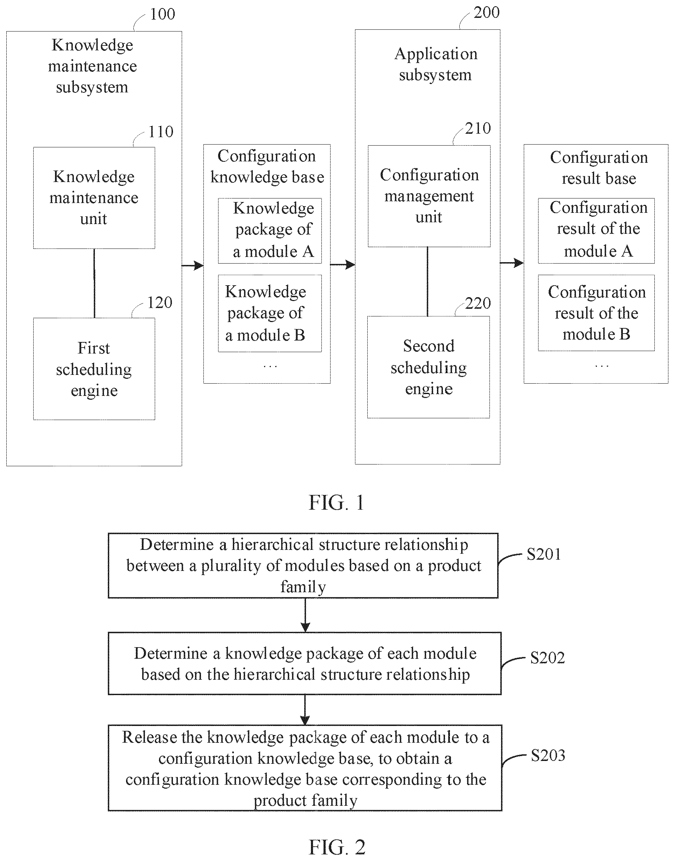

FIG. 1 is an architectural diagram of a configuration system according to an embodiment of this application. The configuration system includes a knowledge maintenance subsystem 100 and an application subsystem 200. The knowledge maintenance subsystem 100 includes a knowledge maintenance unit 110 and a first scheduling engine 120. The knowledge maintenance unit 110 is configured to create a knowledge package of each module in a product family, release the knowledge package of each module to a configuration knowledge base, and maintain the configuration knowledge base during use of the configuration knowledge base, for example, modify data in knowledge packages of some modules. The first scheduling engine 120 is configured to test invocation logic between knowledge packages of the modules after the configuration knowledge base is created and before the configuration knowledge base is released. The configuration knowledge base includes the knowledge package of the modules included in the product family, and each knowledge package includes information such as an optional object of the corresponding module. The application subsystem 200 includes a configuration management unit 210 and a second scheduling engine 220. The configuration management unit 210 is configured to display a user interface to a user, and receive a user requirement that is input by the user on the user interface for a product or a user requirement that is selected by the user on the user interface. The second scheduling engine 220 is configured to obtain, from the configuration knowledge base based on the user requirement, the knowledge package of each module included in the product, and perform selection on each module based on data of the knowledge package of each module, to obtain a configuration result of each module. Finally, a product that meets the user requirement is obtained. It should be noted that the first scheduling engine 120 and the second scheduling engine 220 may be a same engine, or may be different engines.

The following first describes a method for creating a configuration knowledge base provided by this application. FIG. 2 is a schematic flowchart of a method for creating a configuration knowledge base according to the invention of this application. The method includes S201 to S203.

S201. Determine a hierarchical structure relationship between a plurality of modules based on a product family.

In this embodiment of this application, one product may include one or more modules, and some modules may further include one or more child modules. For example, a desktop computer includes three modules: a host, a display, and an external device. The host includes child modules such as a processor and a hard disk. The external device includes child modules such as a keyboard and a mouse. The product family includes a plurality of products formed by various modules with different configurations. Different products may include a same module. Brands, models, styles, or the like of the same module included in the different products may be different. For example, all the products in the product family are desktop computers. The desktop computer includes a host (including a child module included in the host), a display, and an external device. Different desktop computers each include two modules: a host and a display. However, a chassis of a host of a desktop computer of a first type may be a horizontal chassis, and a processor model is of C series. A chassis of a host of a desktop computer of a second type may be a vertical chassis, and a processor model is of A series. For another example, another product in the product family is an all-in-one computer, and the all-in-one computer includes modules such as a display, an external device, a processor, and a hard disk.

In this embodiment of this application, a hierarchical structure can represent an inclusion relationship between the plurality of modules included in the product family. One or more modules at a same layer belong to a module at an upper layer. A module may not include a child module, or may include one or more modules at a lower layer. For example, the display does not include another module. The processor and the hard disk are modules at a same layer, and both belong to the host at an upper layer. The host includes the processor and the hard disk at a lower layer.

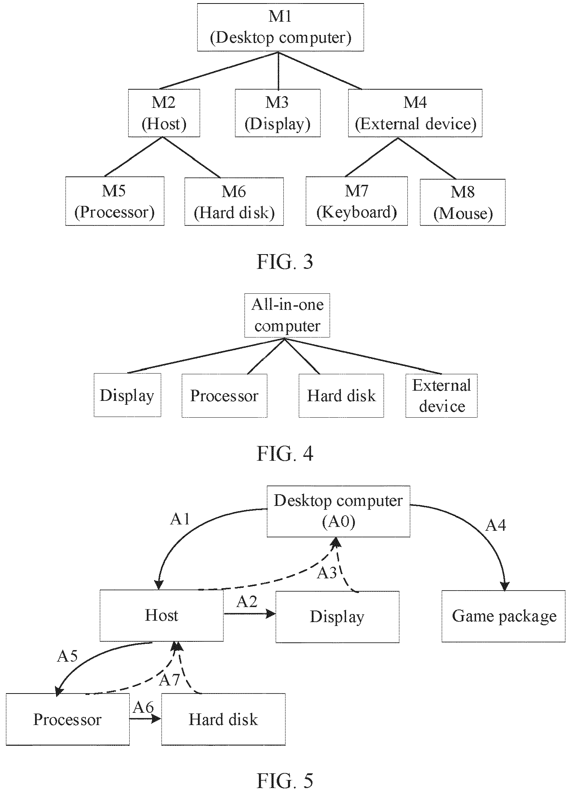

FIG. 3 is a schematic diagram of a hierarchical structure according to an embodiment of this application. A hierarchical structure of modules corresponding to a product may be a tree structure shown in FIG. 3. Modules corresponding to a product family include a root module and a descendant module. The root module refers to a product, and the descendant module refers to each module included in the product except the root module. In the hierarchical structure shown in FIG. 3, a top layer is the root module, other modules are descendant modules of the root module. Modules at a same layer are sibling modules of each other. When there is an association relationship between a module at an upper layer and one or more modules at a lower layer (which is indicated by a line as a connection between an upper-layer module and a lower-layer module in the figure), for example, a configuration result of the upper-layer module affects a configuration result of the lower-layer module, the module at the upper layer may be referred to as a parent module, and a module at the lower layer having an association relationship with the parent module is referred to as a child module of the parent module. For example, in FIG. 3, M1 is the root module, and M2, M3, M4, M5, and M6 are descendant modules of the root module M1. M1 is a parent module of M2, M3, and M4. M2, M3, and M4 are child modules of M1. M2, M3, and M4 are sibling modules of each other. M2 is a parent module of M5 and M6. M5 and M6 are child modules of M2. M5 and M6 are sibling modules of each other. M4 is a parent module of M7 and M8. M7 and M8 are child modules of M4. M7 and M8 are sibling modules of each other. Using the foregoing desktop computer as an example, M1 may be the desktop computer, M2 is the host, M3 is the display, M4 is the external device, M5 is the processor, M6 is the hard disk, M7 is the keyboard, and M8 is the mouse.

It should be noted that a quantity of layers of the tree structure of the modules corresponding to the product family is related to the modules included in the product. The quantity of layers of the tree structure may be any quantity of layers greater than 1. This is not limited in this embodiment of this application. FIG. 4 is a schematic diagram of a hierarchical structure corresponding to an all-in-one computer. A tree structure corresponding to the all-in-one computer includes two layers. The all-in-one computer is a root module. A display, an external device, a processor, and a hard disk are child modules of the all-in-one computer. The display, the external device, the processor, and the hard disk are sibling modules of each other.

S202. Determine a knowledge package of each module based on the hierarchical structure relationship.

After the hierarchical structure of the modules included in the product family is constructed, the knowledge package corresponding to each module needs to be configured, so that when a user needs to customize a product, a configuration result of each module is determined based on data in the knowledge package of each module, to obtain a product that meets a user requirement. The knowledge package of the module includes basic information, a parameter set, and a component set of the module. The basic information includes a module name, maintenance time, a version, or the like. The maintenance time may include creation time of the knowledge package time of performing modification the last one or more times, or the like. The parameter set includes one or more parameters. The parameter indicates an optional feature of the module, and the optional feature indicates a component that can be selected and configured by the user. The component set includes one or more components. One component includes one or more optional objects of one module. The component includes different attributes, for example, one or more of a number, a model, a price, a volume, or a weight. For example, a mainboard component includes four numbers: Z001, Z002, Z003, and Z004. Each number corresponds to a price. Each number represents a mainboard of a different model. The price corresponding to the number is a price of the mainboard of the model.

The knowledge package of the module may further include a statistical set. The statistical set includes one or more statistical items, and indicates related data, of the module, on which statistics needs to be collected after a specific configuration result of one module is determined, for example, a weight and a price, of the module in the case of a current configuration result, on which statistics needs to be collected. A total weight and a total price of the entire product are determined by using the data in the statistical set of each module and are displayed to the user. If one module further includes one or more child modules, a knowledge package of the module further includes a child module set, and the child module set records the child module included in the module.

The desktop computer is used as an example. The following Table 1 lists an example of information included in a knowledge package corresponding to the host of the desktop computer. The host includes two optional features: a mainboard brand and a chassis style. The component set includes two components: a mainboard and a chassis. The mainboard and the chassis each include three attributes: a number, a price, and a weight. The number of the mainboard represents a mainboard model. The number of the chassis may represent a style (a vertical style or a horizontal style) and a size of the chassis. For example, L represents the vertical style, and W represents the horizontal style. It should be understood that Table 1 only lists an example of some parameters, components, and child modules included in the host. The host may further include more parameters, components, and child modules, which are not listed one by one herein.

**Table 1**

| Host | | | | |
|---|---|---|---|---|
| Parameter set | Mainboard brand | | | |
| | Chassis style | | | |
| Component set | Mainboard | Number | Price | Weight |
| | | Z001 | p1 | w1 |
| | | Z002 | p2 | w2 |
| | | Z003 | p3 | w3 |
| | | Z004 | p4 | w4 |
| | Chassis | Number | Price | Weight |
| | | L001 | p5 | w5 |
| | | WO01 | p6 | w6 |
| | | WO02 | p7 | w7 |
| Statistical set | Total weight | | | |
| | Total price | | | |
| Child module set | Processor | | | |
| | Hard disk | | | |

It should be noted that, the parameter set and the component set in the knowledge package only list the objects that can be selected when product configuration is performed on each module included in the product family, and a value is not assigned to each module, that is, specific objects selected for each module and a quantity thereof are not provided. A value is assigned to each module based on the user requirement only when the application subsystem 200 invokes the knowledge package in the configuration knowledge base based on the user requirement to perform configuration calculation, to obtain a module instance corresponding to each module. The module instance is a configuration result of a module, including the selected object and the quantity thereof. For example, if a value is assigned to the host shown in Table 1, one mainboard numbered Z001 and one horizontal chassis numbered WO02 are selected, and a module instance of the host is "one mainboard numbered Z001, one horizontal chassis numbered WO02, a total weight of 3 kg, and a price of 5000 yuan".

In this embodiment of this application, if the parent module further includes one or more child modules, each child module also corresponds to a knowledge package. For example, the host further includes two child modules: a processor and a hard disk, as shown in the following Table 2 and Table 3. Table 2 lists an example of information included in a knowledge package corresponding to the processor, and Table 3 lists an example of information included in a knowledge package corresponding to the hard disk. A parameter set of the processor includes two parameters: a processor brand and a quantity of processor cores. Optional configurations of the processor brand include brand C and brand A. Optional configurations of the quantity of processor cores include four cores, eight cores, and more than eight cores. A component set of the processor includes a model and a price shown in Table 2. The model may represent a processor brand, a quantity of processor cores, and a processor frequency. For example, I represents a processor of brand C, and R represents a processor of brand A.

**Table 2**

| Processor | | |
|---|---|---|
| Parameter set | Processor brand | |
| | Quantity of processor cores | |
| Component set | Model | Price |
| | I9-12800K | p8 |
| | I7-9900 | p9 |
| | R9-5900 | p10 |
| | R7-5800 | p11 |
| Statistical set | Quantity | |
| | Price | |

A parameter set of the hard disk includes a hard disk brand, a hard disk type, and a storage space size. Optional configurations of the hard disk brand include brand X and brand Y. Optional configurations of the hard disk type include a mechanical hard disk and a solid-state disk. Optional types of the storage space size include 512 gigabytes (Gigabytes, GB), 1 terabyte (Terabyte, TB), more than 1 TB, and the like. A component set of the hard disk includes storage space sizes, prices, weights, and the like of hard disks numbered J001 to J00m and numbered G001 to G00n that are shown in Table 3. The first letter of the number may represent a type of the hard disk. For example, J represents the mechanical hard disk, and G represents the solid-state disk. It should be understood that Table 2 and Table 3 only list examples of some parameters, components, and child modules included in the processor/hard disk. The processor/hard disk may further include more parameters, components, and child modules, which are not listed one by one herein.

**Table 3**

| Hard disk | | | | |
|---|---|---|---|---|
| Parameter set | Hard disk brand | | | |
| | Hard disk type | | | |
| | Storage space size | | | |
| Component set | Number | Storage space size | Price | Weight |
| | J001 | 512 GB | p12 | w8 |
| | ... | | p13 | w9 |
| | J00m | 1 TB | p14 | w10 |
| | G001 | 256 GB | p15 | w11 |
| | ... | | P16 | w12 |
| | G00n | 512 GB | p17 | w13 |
| Statistical set | Quantity | | | |
| | Weight | | | |
| | Price | | | |

In this embodiment of this application, constructing the knowledge package of modules further includes constructing invocation logic between the modules. The foregoing hierarchical structure can further represent the invocation logic between the modules. The modules in the foregoing hierarchical structure have the following invocation logic: (a) The parent module may assign a value to the child module. That the parent module assigns a value to the child module means that after a configuration result of the parent module changes, configuration results of some or all child modules corresponding to the parent module change. For example, in the hierarchical structure of the modules shown in FIG. 3, M1 may assign a value to M2, but M1 cannot assign a value to M5, and M2 cannot assign a value to M1. (b) The upper-layer module may obtain a value of the lower-layer module, that is, the upper-layer module can obtain a configuration result of the lower-layer module, to collect statistics on information about the child module, for example, a quantity, a price, or a weight of the child module. For example, in the hierarchical structure of the modules shown in FIG. 3, M1 may obtain values of M2 and M5, to collect statistics on a weight of a final desktop computer. (c) In sibling modules at a same layer, one module can assign values to one or more other modules at the same layer, but the modules cannot assign values to each other. For example, in the hierarchical structure of the module shown in FIG. 3, if M2 may assign a value to M3 or may assign a value to M4, M3 and M4 cannot assign a value to M2; if M3 may assign a value to M4, M4 cannot assign a value to M3. In this embodiment of this application, if one module can assign values to one or more sibling modules at a same layer, the module is referred to as a front sibling module of the one or more sibling modules, and a module to which the front sibling module assigns a value is referred to as a rear sibling module.

In this embodiment of this application, the invocation logic between the modules is embodied by an algorithm of the module. That is, a knowledge package of one module further includes an algorithm of the module. The algorithm of the module includes an internal algorithm and an interface algorithm. The internal algorithm of the module includes a relationship between the parameters, components, and statistics of the module. The internal algorithm of the module is used to obtain a part of a configuration of the module after being executed based on a user requirement.

The interface algorithm of the module is used to describe invocation logic and/or statistical logic between the modules. The interface algorithm includes an input interface algorithm and an output interface algorithm. The input interface algorithm includes a value assignment algorithm and a life algorithm. The value assignment algorithm and the life algorithm are used to describe a relationship between a parent module and a child module, or a relationship between child modules at a same layer (that is, between sibling modules at a same layer). If the value assignment algorithm or the life algorithm exists between the parent module and the child module, when the modules in the product are configured through the second scheduling engine 220, if a module instance corresponding to the parent module is created, whether to create a module instance corresponding to the child module of the parent module is determined by a running result of the life algorithm between the parent module and the child module. If the running result of the life algorithm indicates that the module instance corresponding to the child module needs to be created, the module instance corresponding to the child module is created. If the running result of the life algorithm indicates that the module instance corresponding to the child module does not need to be created, the module instance corresponding to the child module is not created, and if the module instance corresponding to the child module has been created, the module instance corresponding to the child module is deleted.

If the value assignment algorithm exists between the parent module and the child module, when the configuration result of the parent module changes, an input interface algorithm (that is, a value assignment algorithm of the parent module for the child module) of the parent module pointing to the child module is triggered, and the second scheduling engine 220 re-runs an input interface algorithm and an internal algorithm of the child module, to reconfigure the child module. If a front sibling module at a same layer has a value assignment algorithm for a rear sibling module at the same layer, when a configuration result of the front sibling module changes, an input interface algorithm of the front sibling module pointing to the rear sibling module is triggered, and the second scheduling engine 220 re-runs an input interface algorithm and an internal algorithm of the rear sibling module, to reconfigure the rear sibling module.

The output interface algorithm includes a statistical algorithm. After a configuration result of a module in the product is obtained, data statistics of the module are collected based on a statistical item of the module to obtain statistical data of the module, for example, a price, a weight, or a volume of the module, to determine a total weight and a total price of the final product.

It can be learned from the analysis that an algorithm of one module includes an internal algorithm, an input interface algorithm, and an output interface algorithm. However, in a running state, that is, when product configuration is performed through the second scheduling engine 220 based on the configuration knowledge base, an input interface algorithm of a module is triggered by a parent module at an upper layer or a front sibling module at a same layer. Therefore, in a construction state, that is, when the knowledge package corresponding to each module is created through the knowledge maintenance unit 110, an input interface algorithm of a module is written into a knowledge package of a parent module of the module. In the running state, an execution result obtained by executing an input interface algorithm of a module belongs to a part of a configuration result of the module. Therefore, when a knowledge package is constructed, a knowledge package of a module includes an internal algorithm of the module, an interface algorithm of a child module of the module, and an output interface algorithm of the module. The interface algorithm of the child module includes an input interface algorithm of a parent module pointing to the child module and/or an input interface algorithm between child modules, for example, a value assignment algorithm of the parent module for the child module and a value assignment algorithm of a child module of the parent module for another child module. After the knowledge package of each module in the product family is constructed, an input interface algorithm of a module does not belong to a knowledge package of the module, but belongs to a knowledge package of a parent module of the module. However, a result obtained by executing the input interface algorithm of the module belongs to a configuration result of the module. It should be understood that the algorithm may be expressed using a rule, a constraint, code, a chart, or the like. This is not specifically limited in this embodiment of this application.

Through separation of the construction state and the running state, if different products or different product families include a same module, for example, the desktop computer and the all-in-one computer both include the processors, but trigger conditions of an input interface algorithm of the module in the different product families are different, the input interface algorithm of the module is written into knowledge packages of upper-layer parent modules corresponding to the module in different product families. In this way, the knowledge package of the module includes only an internal algorithm and an interface algorithm of the module. In this case, the interface algorithm refers to an interface algorithm of a child module of the module when the module is used as a parent module. Execution results of these algorithms are unrelated to a parent module of the module. Therefore, the knowledge package of the module can be reused. That is, when different product families have a same module, only a data package of the module needs to be created when a configuration knowledge base of one product family is created, and the knowledge package of the module does not need to be created again when a configuration knowledge base of another product family is created. In addition, when maintaining a data package of one module, for example, modifying an optional configuration of an optional feature of the module, maintenance personnel do not need to pay attention to logic of invoking the module by different product families, so that a problem that invoking the module by a product family is damaged after the modification can be avoided.

For example, the desktop computer and the all-in-one computer each include two modules: the processor and the hard disk. As shown in FIG. 3 and FIG. 4, positions of the processor and the hard disk of the all-in-one computer in the tree structure are different from positions of the processor and the hard disk of the desktop computer in the tree structure. However, the processor (including the parameter set, the component set, and the statistical set) in the all-in-one computer is consistent with the processor in the desktop computer, and the hard disk (including the parameter set, the component set, and the statistical set) in the all-in-one computer is consistent with the hard disk in the desktop computer. If the knowledge package of the processor and the knowledge package of the hard disk have been created when the knowledge package of each module in the desktop computer is created, the knowledge package of the processor and the knowledge package of the hard disk in the desktop computer can be reused instead of being recreated when the knowledge package of each module in the all-in-one computer is created.

Specifically, FIG. 5 is a schematic diagram of a relationship between a hierarchical structure and an interface algorithm of each module of a desktop computer according to an embodiment of this application. The desktop computer includes two child modules: a host and a display, and the host includes two child modules: a processor and a hard disk. In the hierarchical structure of the desktop computer, the desktop computer is a root module, the host and the display are child modules of the desktop computer, and the host and the display are sibling modules of each other. The host is a parent module of the processor and the hard disk, the processor and the hard disk are child modules of the host, and the processor and the hard disk are sibling modules of each other. In the hierarchical structure of each module of the desktop computer shown in FIG. 5, an internal algorithm of the desktop computer is A0. A value assignment algorithm A1 exists between the desktop computer and the host. A value assignment algorithm A2 exists between the host and the display. A statistical algorithm A3 exists between the child modules (the host and the display) and the desktop computer. A life algorithm A4 exists between the desktop computer and a game package. For the host, A1 is an input interface algorithm of the host. For the display, A2 is an input interface algorithm of the display. When the host is used as a parent module, a value assignment algorithm A5 exists between the host and the processor, a value assignment algorithm A6 exists between the processor and the hard disk, and a statistical algorithm A7 exists between the child modules (the processor and the hard disk) and the host. For the processor, A5 is an input interface algorithm of the processor. For the hard disk, A6 is an input interface algorithm of the hard disk.

In a constructed knowledge package of each module in the desktop computer, the knowledge package of the desktop computer includes the internal algorithm A0 and interface algorithms A1, A2, A3, and A4. The knowledge package of the host includes interface algorithms A5, A6, and A7. The knowledge packages of the display, the processor, and the hard disk all include respective internal algorithms.

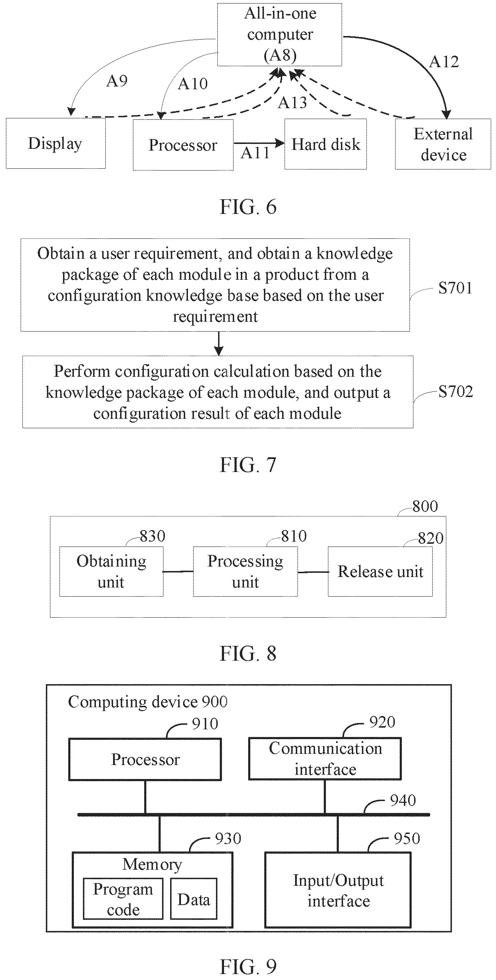

An all-in-one computer includes four child modules: a display, a processor, a hard disk, and an external device. A hierarchical structure and an algorithm relationship of each module in the all-in-one computer are shown in FIG. 6. An internal algorithm of the all-in-one computer is A8, a value assignment algorithm A9 exists between the all-in-one computer and the display, a value assignment algorithm A10 exists between the all-in-one computer and the processor, a value assignment algorithm A12 exists between the all-in-one computer and the external device, a value assignment algorithm A11 exists between the processor and the hard disk, and a statistical algorithm A13 exists between the child modules (including the display, the processor, the hard disk, and the external device) and the all-in-one computer. In a constructed knowledge package of each module in the all-in-one computer, the knowledge package of the all-in-one computer includes the internal algorithm A8 and interface algorithms A9, A10, A11, A12, and A13. The knowledge packages of the display, the processor, the hard disk, and the external device all include respective internal algorithms.

Although the value assignment algorithm A5 from the host to the processor in the desktop computer is different from the value assignment algorithm A10 from the all-in-one computer to the processor in the all-in-one computer, when the knowledge package is constructed, the value assignment algorithm A5 in the desktop computer is written into the knowledge package of the host, and the value assignment algorithm A10 in the all-in-one computer is written into the knowledge package of the all-in-one computer. Therefore, another algorithm included in the processor in the all-in-one computer is the same as another algorithm included in the processor in the desktop computer. Basic information, a parameter set, and a component set included in the knowledge package of the processor in the all-in-one computer are the same as those in the desktop computer. The knowledge package of the processor in the all-in-one computer can use the knowledge package of the processor in the desktop computer and does not need to be re-created.

S203. Release the knowledge package of each module to a configuration knowledge base, to obtain a configuration knowledge base corresponding to the product family.

The configuration knowledge base includes the knowledge package of each module in the product family. After each module in the product family is developed and the configuration knowledge base corresponding to the product family is created, if a user needs to purchase a product of the product family, the second scheduling engine determines a configuration of each module based on a user requirement provided by the user and in combination with the knowledge package of each module in the configuration knowledge base, to obtain a product that meets the requirement.

In a possible implementation, before the knowledge package of each module in the product family is released to the configuration knowledge base, the invocation logic between the modules needs to be tested. Specifically, test personnel may simulate the user to input the user requirement. The first scheduling engine 120 obtains, based on the product that is input by the user, knowledge packages of a plurality of modules included in the product, and executes, based on the hierarchical relationship and the invocation logic between the modules, an algorithm corresponding to each module, to configure each optional feature of each module, obtain a configuration result corresponding to each module, and further output the product determined based on the user requirement that is input by the user. After a plurality of tests, whether the output product meets the user requirement is determined. If the output product meets the user requirement, it indicates that the hierarchical relationship and the invocation logic between the modules of a current product family meet the requirement and can be released to the knowledge base.

It should be noted that, the foregoing uses the desktop computer as an example to describe the method for creating a configuration knowledge base. For another product or solution, a corresponding configuration knowledge base can also be created according to the foregoing method, and details are not described herein again. S201 to S203 can be implemented through the knowledge maintenance unit 110 in FIG. 1. The test process can be implemented through the first scheduling engine 120 in FIG. 1.

After the configuration knowledge base is constructed, the user can quickly perform product configuration based on the configuration knowledge base. The following describes a method for applying a configuration knowledge base provided in an embodiment of this application. The application method is a method for the application subsystem 200 to perform product configuration by receiving the user requirement of the user and in combination with the configuration knowledge base after the configuration knowledge base corresponding to the product family is created. FIG. 7 is a schematic diagram of a method for performing product configuration by applying a configuration knowledge base according to an embodiment of this application. The method includes S701 and S702.

S701. Obtain a user requirement, and obtain a knowledge package of each module in a product from a configuration knowledge base based on the user requirement.

When a user needs a product, a user requirement may be input on a user interface provided by a configuration management unit 210 of an application subsystem. After the configuration management unit 210 obtains the user requirement, a second scheduling engine 220 determines, based on the user requirement, the product that the user needs to purchase, and obtains, from the configuration knowledge base based on the product, a knowledge package of each module included in the product.

S702. Perform configuration calculation based on the knowledge package of each module, and output a configuration result of each module.

After obtaining the knowledge package of each module included in the product, the second scheduling engine 220 executes all algorithms of each module from a root module, and outputs the configuration result of each module, to obtain one or more products that are configured by the application subsystem 200 based on the user requirement. It should be noted that, when all the algorithms of each module are executed, the module is in a running state. In this case, all algorithms of one module that are executed include an input interface algorithm of the module, an internal algorithm of the module, all algorithms of child modules of the module, and an output interface algorithm of the module.

It should be noted that, after the application subsystem 200 outputs the configuration result of each module in the product, the user may modify a configuration result of a module. The second scheduling engine 220 re-performs configuration calculation from a starting module, to obtain a new configuration result of each module. The starting module is a module whose configuration result is modified by the user, and the starting module may be any module in the hierarchical structure shown in FIG. 3, for example, the root module M1, the module M2 with a child module at a middle layer, or M3 or M6 without a child module.

The second scheduling engine 220 performs configuration calculation based on a hollow tree algorithm provided in this application, to obtain a configuration result of each module. A process of performing configuration calculation based on the hollow tree algorithm and executing all the algorithms of each module is as follows:
S1. Determine the starting module, and modify the starting module.
S2. Execute an internal algorithm of the starting module.
S3. Execute all algorithms of a child module of the starting module.

The starting module may include one or more child modules. When the starting module includes a plurality of child modules, a topology sequence of the plurality of child modules needs to be first determined, and all algorithms of the child modules are sequentially executed based on the topology sequence. The topology sequence indicates a sequence in which child modules at a same layer perform all algorithms. For example, the root module includes a child module A, a child module B, and a child module C. The topology sequence is the child module A, the child module C, and the child module B. When full calculation is performed, all algorithms of the child module A are first executed, then all algorithms of the child module C are executed, and all algorithms of the child module B are finally executed.

According to invocation logic between the modules in the configuration knowledge base, a sequence in which all child modules of the starting module execute all algorithms of the child modules can be determined. For example, the child modules of the starting module include a first child module and a second child module. If the first child module is a front sibling module of the second child module, the second scheduling engine 220 first executes all algorithms of the first child module, and then executes all algorithms of the second child module. For example, for the host and the display of the desktop computer shown in FIG. 5, the host is the front sibling module of the display, the value assignment algorithm A2 exists from the host to the display, and the configuration result of the host may affect the configuration result of the display. Therefore, during the configuration calculation, the second scheduling engine 220 first executes all algorithms of the host, and then executes all algorithms of the display.

It should be understood that the executing all algorithms of the first child module includes executing all algorithms of child modules included in the first child module. Therefore, when all algorithms of a plurality of child modules included in the first child module are executed, a topology sequence of the plurality of child modules included in the first child module also needs to be determined.

It should be noted that, if a configuration result of the first child module of the starting module does not affect a configuration result of the second child module at a same layer, a sequence of executing all the algorithms of the first child module and all the algorithms of the second child module is not limited. For example, the configuration result of the processor in the all-in-one computer shown in FIG. 6 does not affect the configuration result of the external device. If the starting module is the all-in-one computer, a sequence of executing all algorithms of the processor and all algorithms of the external device through the second scheduling engine 220 is not limited. When the starting module does not include a child module, S3 is not performed.

S4. Execute an output interface algorithm of the starting module.

In this embodiment of this application, the output interface algorithm is mainly a statistical algorithm. After the internal algorithm of the starting module and all the algorithms of the child modules of the starting module are executed, a configuration result of the starting module may be obtained. Then, the statistical algorithm of the starting module is executed to collect statistics on data of each statistical item of the starting module in a current configuration result, for example, a price and a weight.

S5. Execute all algorithms of a rear sibling module of the starting module.

There may be one or more rear sibling modules of the starting module. When there are a plurality of rear sibling modules of the starting module, a topology sequence of the plurality of rear sibling modules of the starting module also needs to be first determined, and all algorithms of the rear sibling modules are sequentially executed based on the topology sequence.

S6. Execute output interface algorithms of all direct parent modules of the starting module.

The direct parent modules of the starting module include a parent module of the starting module, a parent module of the parent module of the starting module, and the like. For example, in the hierarchical structure shown in FIG. 3, if M5 is the starting module, direct parent modules of M5 include M2 and M1. When the output interface algorithms of all the parent modules of the starting module are executed, the parent modules of the starting module are found from bottom to top in sequence from the starting module to the root module based on the hierarchical relationship. For each parent module, an output interface algorithm of a current parent module is first executed, and then an algorithm of a rear sibling module of the current parent module is executed.

In this embodiment of this application, executing all algorithms of one module includes executing an input interface algorithm of the module, an internal algorithm of the module, all algorithms of child modules of the module, and an output interface algorithm of the module. When all algorithms of one module are executed, an input interface algorithm of the module is first executed, then an internal algorithm of the module is executed, all algorithms of child modules of the module are next executed, and an output interface algorithm of the module is finally executed. For a method for executing all the algorithms of the child modules of the module, refer to the descriptions in S3.

It should be noted that, if the user inputs the user requirement for the first time, it may be considered that the root module is modified, that is, the starting module is the root module. The following describes an execution process of the foregoing hollow tree algorithm by using an example in which the product is the desktop computer and the starting module is the root module.

As shown in FIG. 5 and Table 4, Table 4 lists the invocation logic between the modules of the desktop computer. If the user selects the desktop computer as the product, the second scheduling engine 220 loads the knowledge package of each module of the desktop computer. Based on the hierarchical structure and the invocation logic of each module of the desktop computer, the second scheduling engine 220 first executes the internal algorithm A0 of the desktop computer. If the user selects a high-configuration desktop computer, it is determined that a version of the desktop computer is a version identified as V1R1 or a version identified as V1R3. If the user selects a medium-configuration or low-configuration desktop computer, it is determined that a version of the desktop computer is a version with another identifier.

After the user selects the high-configuration desktop computer, a value assignment algorithm A1 from the desktop computer to a host is triggered, that is, an input interface algorithm of the host is triggered. Based on the value assignment algorithm A1, in the case of the high-configuration desktop computer, it is determined that a mainboard brand of the host is brand H, and then an internal algorithm of the host is executed to determine that a chassis style of the host is a horizontal style. In the case of the medium-configuration desktop computer, a mainboard brand of the mainboard is determined as brand Q, and then an internal algorithm of the host is executed to determine that a chassis style of the host is a horizontal style. If the user selects the high-configuration desktop computer, the second scheduling engine 220 may execute a life algorithm A4 from the desktop computer to a game package, to gift the game package.

After the internal algorithm of the host is executed to determine the chassis style of the host, a value assignment algorithm A5 from the host to a processor is triggered. Based on the value assignment algorithm A5, when the mainboard brand is brand H, it is determined that a processor brand is brand C. Then, the internal algorithm of the processor is executed to determine that a quantity of processor cores is 8. After an internal algorithm of the processor is executed, a configuration result of the processor is obtained, and then a statistical algorithm of the processor is executed to collect statistics on data of the processor in a current configuration result, for example, a price or a weight. After all algorithms of the processor are executed, a value assignment algorithm A6 between the processor and a hard disk is triggered. Based on the value assignment algorithm A6, when the processor brand is brand C, it is determined that a hard disk brand is brand Y, a hard disk type is a solid-state disk, and a storage space size is 1 TB. After a configuration result of the hard disk is determined, a statistical algorithm of the hard disk is executed to collect statistics on data of the hard disk in a current configuration result, for example, a price or a weight. After all algorithms of child modules of the host are executed, a statistical algorithm A7 of the host is executed.

**Table 4**

| Algorithm | Algorithm type | Algorithm description |
|---|---|---|
| A0 | Internal algorithm | In the case of a high-configuration desktop computer, a desktop computer version is V1R1 or V1R3. |
| A1 | Interface algorithm (value assignment algorithm from a parent module to a child module) | In the case of a high-configuration desktop computer, a mainboard brand of a mainboard is brand H. In the case of a medium-configuration desktop computer, a mainboard brand of a mainboard is brand Q. |
| A2 | Interface algorithm (value assignment algorithm from a child module to another child module) | For a desktop computer, if a chassis style of a host is a horizontal style, a screen size of a display screen is 51 inches. |
| A3 | Interface algorithm (statistical algorithm from a child module to a parent module) | For a desktop computer, a total weight is a sum of weights of the host and a display. |
| A4 | Interface algorithm (life algorithm from a parent module to a child module) | In the case of a high-configuration desktop computer, a game package is gifted. |
| A5 | Interface algorithm (value assignment algorithm from a parent module to a child module) | For a desktop computer, if a mainboard brand of host is H, a processor brand is brand C. |
| A6 | Interface algorithm (value assignment algorithm from a child module to another child module) | For a desktop computer, if a processor brand is brand C, it is determined that a hard disk brand is brand Y, a hard disk type is a solid-state disk, and a storage space size is 1 TB. |
| A7 | Interface algorithm (statistical algorithm from a child module to a parent module) | For a host of a desktop computer, total weight is a sum of weight of a chassis, a processor, and a hard disk. |

After the internal algorithm corresponding to the host, the statistical algorithm, and all the algorithms of the child modules corresponding to the host are executed, a value assignment algorithm A2 from the host to a display is triggered. When a host chassis is a horizontal chassis, it is determined that a screen size of a display screen is 51 inches. Then, an internal algorithm and a statistical algorithm of the display are executed, and a statistical algorithm A3 of the desktop computer is finally executed.

It should be noted that, after an input interface algorithm and an internal algorithm of a module are executed, a configuration result of the module is obtained, and the configuration result of the module includes an object of each component in a component set of the module.

After the application subsystem 200 outputs the configuration result of each module in the product, the user may further modify a configuration result of a module other than the root module. For example, if the user modifies a configuration result of a third child module, the third child module is used as the starting module, and the algorithm of each module is executed based on the foregoing hollow tree algorithm. The third child module may be any module other than the root module, may be a child module of the root module in the tree structure shown in FIG. 3, or may be a module at another layer. This is not specifically limited in this embodiment of this application.

The foregoing desktop computer is still used as an example. If the user modifies the mainboard brand of the host from brand H to brand Q, the second scheduling engine 220 first modifies the mainboard brand to brand Q, and triggers the value assignment algorithm A5 from the host to the processor. Based on the value assignment algorithm A5, when the mainboard brand is brand Q, the processor brand is brand A. Then, the internal algorithm of the processor is executed to determine that the quantity of processor cores is 8. After the internal algorithm of the processor is executed, a new configuration result of the processor is obtained, and then the statistical algorithm of the processor is executed to collect statistics on data of the processor in a new configuration result, for example, a price or a weight. After all the algorithms of the processor are executed, the value assignment algorithm A6 between the processor and the hard disk is triggered. Based on the value assignment algorithm A6, when the processor brand is brand A, it is determined that the hard disk brand is brand Y, the hard disk type is the solid-state disk, and the storage space size is 512 GB. After a new configuration result of the hard disk is determined, the statistical algorithm of the hard disk is executed to collect statistics on data of the hard disk in the new configuration result, for example, a price or a weight. After all the algorithms of the child modules of the host are executed, the statistical algorithm A7 of the host is executed.

After the internal algorithm corresponding to the host, the statistical algorithm, and all the algorithms of the child modules corresponding to the host are executed, the value assignment algorithm A2 from the host to the display is triggered. When the host chassis is the horizontal chassis, it is determined that the screen size of the display screen is 51 inches. Then, the internal algorithm and the statistical algorithm of the display are executed, and the statistical algorithm A3 of the desktop computer is finally executed.

In a possible implementation, if the user modifies the configuration result of the third child module, and a fourth child module is a child module of the third child module, or a fourth child module is a rear sibling module of the third child module. When configuration calculation is performed based on the hollow tree algorithm, configuration calculation may be performed through differential calculation. Specifically, before an input interface algorithm of the fourth child module is executed, an execution result of the input interface algorithm of the fourth child module before the configuration result of the third child module is modified is first backed up. Then, the input interface algorithm of the fourth child module is executed based on the modification of the third child module, to obtain another execution result of executing the input interface algorithm of the fourth child module. If two successive execution results of the input interface algorithm of the fourth child module are the same, a remaining algorithm of the fourth child module may not be executed. That is, none of an internal algorithm of the fourth child module, algorithms of child modules included in the fourth child module, a statistical algorithm of the fourth child module, and the like is executed, and then all algorithms of a rear sibling module of the fourth child module are executed. In the differential calculation manner, a calculation amount of the application subsystem 200 can be reduced, calculation efficiency can be improved, a speed of feeding back a configuration result by the application subsystem 200 can be increased, and user experience can be improved. If two successive execution results of the input interface algorithm of the fourth child module are different, a result of the input interface algorithm of the fourth child module is updated to a new execution result, and then all algorithms of the fourth child module continue to be executed.

The foregoing desktop computer is still used as an example. If the user changes the mainboard brand from brand H to brand Q, the value assignment algorithm A5 from the host to the processor is triggered. In this case, a current execution result of the value assignment algorithm A5 is first backed up, that is, the processor brand is brand C. Then, the value assignment algorithm A5 is executed again. When the mainboard brand is brand Q, it is learned that the processor brand is brand A. Therefore, two successive execution results of the value assignment algorithm A5 are different. The internal algorithm and the statistical algorithm of the processor continue to be executed. After all the algorithms of the processor are executed, the value assignment algorithm A6 between the processor and the hard disk is triggered. In this case, a current execution result of the value assignment algorithm A6 is backed up. Then, when the processor brand is brand A, the value assignment algorithm A6 is executed, to obtain a new execution result corresponding to the value assignment algorithm A6. If the new execution result of the value assignment algorithm A6 is different from a current execution result, the execution result of the value assignment algorithm A6 is updated to the new execution result, the internal algorithm and the statistical algorithm of the hard disk are executed, and then all algorithms of a rear sibling module, namely, the display, of the host are executed. If the new execution result of the value assignment algorithm A6 is the same as a current execution result, the current configuration result of the hard disk is retained, none of algorithms of the hard disk is executed, and all the algorithms of the rear sibling module, namely, the display, of the host are executed.

Before all the algorithms of the display are executed, a current execution result of the value assignment algorithm A2 from the host to the display is also backed up, and then the value assignment algorithm A2 is executed, to obtain a new execution result corresponding to the value assignment algorithm A2. If the new execution result of the value assignment algorithm A2 is different from a current execution result, the execution result of the value assignment algorithm A2 is updated to the new execution result, and the internal algorithm and the statistical algorithm of the display are executed. If the new execution result of the value assignment algorithm A2 is the same as the current execution result, the current configuration result of the hard disk is retained, and none of the algorithms of the hard disk is executed.

In a possible implementation, if the user performs product configuration on a navigation page provided by the application subsystem 200, each module in the product corresponds to a corresponding navigation page, that is, one module corresponds to one navigation page. If the user modifies the configuration result of the third child module on a navigation page corresponding to the third child module, the modification of the configuration result of the third child module affects a configuration result of another module, for example, affects a configuration result of a child module of the third child module, affects a configuration result of a rear sibling module of the third child module, and affects a total price of the product. However, only the configuration result of the third child module is displayed on a current navigation page. Therefore, after receiving the modification made by the user to the configuration result of the third child module, the second scheduling engine 220 may perform delayed scheduling. To be specific, the second scheduling engine 220 only modifies the third child module and executes the internal algorithm of the third child module, and then returns a new configuration result of the third child module, to display the new configuration result of the third child module on the current navigation page. In this way, the page is quickly refreshed, and the latest configuration result of the module is displayed to the user. That is, the second scheduling engine 220 executes only S1 and S2 of the hollow tree algorithm. For another module, after the application subsystem 200 receives a request for switching the navigation page from the user and switches the navigation page to a navigation page corresponding to a fifth child module, if the configuration result of the third child module affects a configuration result of the fifth child module, the second scheduling engine 220 executes an input interface algorithm and an internal algorithm of the fifth child module based on the hollow tree algorithm, to obtain a new configuration result of the fifth child module, to display the new configuration result of the fifth child module on the navigation page corresponding to the fifth child module.

It should be understood that the second scheduling engine 220 may also return the new configuration result of the third child module after modifying the third child module and completing execution of the internal algorithm of the third child module, to display the new configuration result of the third child module on the current navigation page. In this way, the navigation page is more quickly refreshed, and the latest configuration result of the third child module is displayed to the user. In addition, the second scheduling engine 220 continues to perform configuration calculation based on the hollow tree algorithm, to obtain and store a new configuration result corresponding to another module.

The foregoing describes the method for constructing a knowledge package of each module provided in this application by using each module in the product family as an example. It should be understood that the method for constructing a knowledge package provided in this application is also applicable to a solution. The solution is a solution that requires a plurality of products to work together to resolve a problem. A plurality of products are used in a solution. For example, when a network system of an enterprise is constructed, hardware products such as a server, a switch, a router, a wireless access point, a desktop computer, a network cable, and an attendance machine are used, and various software products such as an attendance system and internal communication software are also used. When a configuration knowledge base for a solution is constructed, each product is equivalent to a module in the product family. Therefore, the configuration knowledge base for the solution can be constructed using the same solution. It should be noted that any product in the solution may be produced by different manufacturers.

When the configuration knowledge base for the solution is constructed, although different solutions have differences, a same product may be required. Therefore, when configuration knowledge bases for different solutions (for example, a first solution and a second solution) are constructed, if a product required in the second solution is also a product required in the first solution, and a configuration knowledge base for the first solution has been constructed, a knowledge package of the same product in the first solution may be reused when a configuration knowledge base for the second solution is constructed. For example, when a network of an enterprise and a network of a school are constructed, because the networks vary in terms of a scale, such as an area, a quantity of buildings, and a quantity of personnel, a final solution varies. For example, a network topology varies, and a solution for the school does not have an attendance system. However, servers and switches are used when configuration knowledge bases for the solutions are constructed. Therefore, after the configuration knowledge base for the solution for the enterprise is constructed, knowledge packages of products such as the servers and the switches in the configuration knowledge base for the solution for the enterprise can be reused to construct a school network.

The hierarchical structure and algorithm logic between the products in the solution are the same as the hierarchical structure and algorithm logic between the modules in the product family. Therefore, after the configuration knowledge base for the solution is constructed, when the configuration knowledge base for the solution is applied to obtain a solution, configuration calculation may be performed with reference to the method in S701 and S702.

For ease of description, the foregoing method embodiments are represented as a series of actions. However, a person skilled in the art should appreciate that this application is not limited to the described action sequence. In addition, a person skilled in the art should also appreciate that all the embodiments described in this specification are example embodiments, and the related actions are not necessarily required by this application.

FIG. 8 shows an apparatus for creating a configuration knowledge base according to an embodiment of this application. The apparatus 800 includes a processing unit 810, a release unit 820, and an obtaining unit 830. The processing unit 810 is configured to: determine a hierarchical structure relationship between modules based on a plurality of modules in a product family, where the hierarchical structure relationship indicates a hierarchical relationship between a parent module and a child module in the plurality of modules, and each parent module includes one or more child modules; and then determine a knowledge package of each module based on the hierarchical structure relationship. A knowledge package of a parent module includes an input interface algorithm of a child module associated with the parent module. The input interface algorithm of the child module needs to be triggered and executed by another module. A part of a configuration result of the child module is obtained after the input interface algorithm of the child module is executed. Specifically, for an operation step in which the processing unit 810 creates the knowledge package of each module, refer to the operations performed by the knowledge maintenance unit 110 in the embodiment corresponding to FIG. 2. Details are not described herein again.

Optionally, after creating the configuration knowledge base, the processing unit 810 may further test the foregoing hierarchical structure relationship and invocation logic between the knowledge packages of the modules. For details, refer to the operations performed by the first scheduling engine 120. Details are not described herein again.

The release unit 820 is configured to release the knowledge package, determined by the processing unit 810, of each module included in the product family to a configuration knowledge base, to obtain a configuration knowledge base of the product family.

The obtaining unit 830 is configured to obtain a user requirement of a user after the configuration knowledge base of the product family is released. The processing unit 810 is further configured to obtain, based on the user requirement, a knowledge package of each module corresponding to a product, and perform configuration calculation based on the user requirement and the knowledge package of each module, to obtain a configuration result of each module that meets the user requirement. Specifically, for an operation step of the processing unit 810, refer to the operations performed by the product configuration management unit 210 and the second scheduling engine 220 in the embodiment corresponding to FIG. 7. Details are not described herein again.

FIG. 9 is a schematic diagram of a computing device according to an embodiment of this application. The computing device 900 includes one or more processors 910, a communication interface 920, and a memory 930. The processor 910, the communication interface 920, and the memory 930 are connected to each other through a bus 940.

For specific implementations of various operations performed by the processor 910, refer to the specific operations in the embodiment corresponding to FIG. 2 or the specific operations in the embodiment corresponding to FIG. 7. For example, the processor 910 is configured to perform operations of the knowledge maintenance subsystem 100 in the embodiment corresponding to FIG. 2, including the operations of the knowledge maintenance unit 110 and the first scheduling engine 120; or implement the operations of the application subsystem 200 shown in FIG. 7. Details are not described herein again.

The processor 910 may have a plurality of specific implementation forms. For example, the processor 910 may be a central processing unit (central processing unit, CPU) or a graphics processing unit (graphics processing unit, GPU). The processor 910 may also be a single-core processor or a multi-core processor. The processor 910 may include a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), generic array logic (generic array logic, GAL), or any combination thereof. Alternatively, the processor 910 may be individually implemented by using a logic device with built-in processing logic, for example, the FPGA or a digital signal processor (digital signal processor, DSP).

The communication interface 920 may be a wired interface or a wireless interface, and is configured to communicate with another module or device. The wired interface may be an Ethernet interface, a local interconnect network (local interconnect network, LIN), or the like. The wireless interface may be a cellular network interface, a wireless local area network interface, or the like. The communication interface 920 in this embodiment of this application may be specifically configured to receive a modification of maintenance personnel, obtain a user requirement of a user, and so on.

The memory 930 may be a nonvolatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The memory 930 may alternatively be a volatile memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

The memory 930 may be further configured to store program code and data, to enable the processor 910 to invoke the program code stored in the memory 930 to perform the operation steps of creating the configuration knowledge base and/or applying the configuration knowledge base in the foregoing method embodiments, and store the obtained knowledge package of each module in the configuration knowledge base. In addition, the computing device 900 may include more or fewer components than those shown in FIG. 9, or may have different component configuration manners.

The bus 940 may be a peripheral component interconnect express (peripheral component interconnect express, PCIe) bus, an extended industry standard architecture (extended industry standard architecture, EISA) bus, a unified bus (unified bus, Ubus, or UB), a computer express link (computer express link, CXL), a cache coherent interconnect for accelerators (cache coherent interconnect for accelerators, CCIX) protocol, or the like. The bus 940 may be classified into an address bus, a data bus, a control bus, and the like. In addition to the data bus, the bus 940 may further include a power bus, a control bus, a status signal bus, and the like. However, for clear description, only one bold line is used to represent the bus in FIG. 9, but this does not mean that there is only one bus or only one type of bus.

Optionally, the computing device 900 may further include an input/output interface 950. The input/output interface 950 is connected to an input/output device, and is configured to receive information that is input by maintenance personnel or a user, and output an operation result.

Specifically, for specific implementations in which the computing device 900 performs various operations, refer to specific operations performed in S201 to S203 or S701 and S702 in the foregoing method embodiments. Details are not described herein again.

An embodiment of this application further provides a computer-readable storage medium. The computer-readable storage medium stores instructions. When the instructions are run on a processor, the method steps in the foregoing method embodiments may be implemented. For specific implementations in which the processor of the computer-readable storage medium performs the method steps, refer to the specific operations described in the embodiment corresponding to FIG. 2 or FIG. 7 in the foregoing method embodiments. Details are not described herein again.

In the foregoing embodiments, the description of each embodiment has respective focuses. For a part that is not described in detail in an embodiment, refer to related descriptions in other embodiments.

This application further provides a configurator. The configurator is software running in a computing device, a cloud service, or a client. A user may perform, through the configurator, the operation steps of the method implemented in FIG. 2 or FIG. 7. For brevity, details are not described herein again.

All or some of the foregoing embodiments may be implemented by software, hardware, firmware, or any combination thereof. When software is used to implement the embodiments, all or some of the foregoing embodiments may be implemented in a form of a computer program product. The computer program product includes one or more computer instructions. When the computer program instructions are loaded or executed on a computer, all or some of the procedures or functions according to embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device such as a server or a data center that includes a set of one or more usable media. The usable medium may be a magnetic medium (for example, a floppy disk, a hard disk, or a magnetic tape), an optical medium, or a semiconductor medium. The semiconductor medium may be a solid-state drive (solid-state drive, SSD).

The steps in the methods in embodiments of this application may be sequentially scheduled, combined, or deleted based on an actual requirement. The modules in the system in embodiments of this application may be divided, combined, or deleted based on an actual requirement.

The foregoing describes embodiments of this application in detail. The principles and implementations of this application are described by using specific examples in this specification. The descriptions of the foregoing embodiments are merely used to help understand the method and the core idea of this application. In addition, a person of ordinary skill in the art can make variations and modifications to this application.

## Claims

1. A method for creating a configuration knowledge base, comprising:
determining (S201) a hierarchical structure relationship between a plurality of modules based on a product family comprising hardware and/or software products, wherein the hierarchical structure relationship indicates a hierarchical relationship between a parent module and a child module in the plurality of modules, and each parent module comprises one or more child modules;
determining (S202) a knowledge package of each of the plurality of modules based on the hierarchical structure relationship, wherein a knowledge package of the parent module comprises an input interface algorithm of the child module, the child module being associated with the parent module, wherein the input interface algorithm of the child module refers to an algorithm whose execution needs to be triggered by another module and is used to describe a relationship between a parent module and a child module, or a relationship between child modules at a same layer; and
releasing (S203) the knowledge package of each module comprised in the product family to a configuration knowledge base, to obtain a configuration knowledge base of the product family.

2. The method according to claim 1, wherein execution of the input interface algorithm of the child module is triggered by the parent module associated with the child module, and a part of a configuration result of the child module is obtained based on a configuration result of the parent module associated with the child module.

3. The method according to claim 1 or 2, wherein execution of the input interface algorithm of the child module is triggered by a front sibling module of the child module, and a part of a configuration result of the child module is obtained based on a configuration result of the front sibling module of the child module; and the child module and the front sibling module of the child module are associated with a same parent module.

4. The method according to any one of claims 1 to 3, wherein the knowledge package of the parent module further comprises an internal algorithm of the parent module, and a part of the configuration result of the parent module is obtained after the internal algorithm of the parent module is executed.

5. The method according to any one of claims 1 to 4, wherein the knowledge package of the parent module further comprises a statistical set of the parent module and an output interface algorithm of the parent module, the statistical set comprises one or more statistical items, the output interface algorithm is used to collect statistics on statistical data of each statistical item of the configuration result of the parent module, and the statistical item comprises any one or more of the following: a price, a weight, or a volume.

6. The method according to claim 4 or 5, wherein the knowledge package of the parent module further comprises a component set of the parent module, the component set comprises one or more components, and each component comprises one or more optional objects of the parent module; and an execution result of the input interface algorithm of the parent module and the internal algorithm of the parent module is the configuration result of the parent module, and the configuration result comprises one object of each component.

7. The method according to claim 6, wherein the method further comprises:
obtaining a user requirement of a user for a product, and obtaining a knowledge package of each module in the product from the configuration knowledge base; and
executing an algorithm of each module based on the user requirement and the knowledge package of each module, and determining a configuration result of each module that meets the user requirement, wherein an algorithm of one module comprises an input interface algorithm, an internal algorithm, and an output interface algorithm.

8. The method according to claim 7, wherein the method further comprises:
executing the internal algorithm of the parent module to obtain a new configuration result corresponding to the parent module when the user modifies the configuration result of the parent module;
storing a previous execution result of the input interface algorithm of the child module before the input interface algorithm of the child module is executed;
executing the input interface algorithm of the child module, to obtain a current execution result of the input interface algorithm of the child module; and
comparing the current execution result with the previous execution result, and when the current execution result is the same as the previous execution result, skipping execution of the internal algorithm of the child module, an algorithm of a child module of the child module, and the output interface algorithm of the child module, and executing an algorithm of a rear sibling module of the child module, wherein execution of an input interface algorithm of the rear sibling module of the child module is triggered by the child module or is triggered by the parent module.

9. An apparatus (800) for creating a configuration knowledge base, comprising:
a processing unit (810), configured to: determine a hierarchical structure relationship between a plurality of modules based on a product family comprising hardware and/or software products, wherein the hierarchical structure relationship indicates a hierarchical relationship between a parent module and a child module in the plurality of modules, and each parent module comprises one or more child modules; and
determine a knowledge package of each of the plurality of modules based on the hierarchical structure relationship, wherein a knowledge package of the parent module comprises an input interface algorithm of the child module, the child module being associated with the parent module, wherein the input interface algorithm of the child module refers to an algorithm whose execution needs to be triggered by another module and is used to describe a relationship between a parent module and a child module, or a relationship between child modules at a same layer; and
a release unit (820), configured to release the knowledge package of each module comprised in the product family to a configuration knowledge base, to obtain a configuration knowledge base of the product family.

10. The apparatus (800) according to claim 9, wherein execution of the input interface algorithm of the child module is triggered by the parent module associated with the child module, and a part of a configuration result of the child module is obtained based on a configuration result of the parent module associated with the child module.

11. The apparatus (800) according to claim 9 or 10, wherein execution of the input interface algorithm of the child module is triggered by a front sibling module of the child module, and a part of the configuration result of the child module is obtained based on a configuration result of the front sibling module of the child module; and the child module and the front sibling module of the child module are associated with a same parent module.

12. A computer-readable storage medium, wherein the computer-readable storage medium stores a computer program, and when the computer program is executed by a processor, the processor performs the operation steps of the method according to any one of claims 1 to 8.

## Patentansprüche

1. Verfahren zum Herstellen einer Konfigurationswissensbasis, umfassend:
Bestimmen (S201) einer hierarchischen Strukturbeziehung zwischen einer Vielzahl von Modulen basierend auf einer Produktfamilie, die Hardware- und/oder Softwareprodukte umfasst, wobei die hierarchische Strukturbeziehung eine hierarchische Beziehung zwischen einem übergeordneten Modul und einem untergeordneten Modul in der Vielzahl von Modulen angibt, und jedes übergeordnete Modul ein oder mehrere untergeordnete Module umfasst;
Bestimmen (S202) eines Wissenspakets jedes der Vielzahl von Modulen basierend auf der hierarchischen Strukturbeziehung, wobei ein Wissenspaket des übergeordneten Moduls einen Eingabeschnittstellenalgorithmus des untergeordneten Moduls umfasst, wobei das untergeordnete Modul mit dem übergeordneten Modul assoziiert ist, wobei sich der Eingabeschnittstellenalgorithmus des untergeordneten Moduls auf einen Algorithmus bezieht, dessen Ausführung durch ein anderes Modul ausgelöst werden muss und verwendet wird, um eine Beziehung zwischen einem übergeordneten Modul und einem untergeordneten Modul oder eine Beziehung zwischen untergeordneten Modulen auf derselben Ebene zu beschreiben; und
Freigeben (S203) des Wissenspakets jedes in der Produktfamilie enthaltenen Moduls an eine Konfigurationswissensbasis, um eine Konfigurationswissensbasis der Produktfamilie zu erlangen.

2. Verfahren nach Anspruch 1, wobei die Ausführung des Eingabeschnittstellenalgorithmus des untergeordneten Moduls durch das übergeordnete Modul, das mit dem untergeordneten Modul assoziiert ist, ausgelöst wird, und ein Teil eines Konfigurationsergebnisses des untergeordneten Moduls basierend auf einem Konfigurationsergebnis des übergeordneten Moduls, das mit dem untergeordneten Modul assoziiert ist, erlangt wird.

3. Verfahren nach Anspruch 1 oder 2, wobei die Ausführung des Eingabeschnittstellenalgorithmus des untergeordneten Moduls durch ein vorderes beigeordnetes Modul des untergeordneten Moduls ausgelöst wird, und ein Teil eines Konfigurationsergebnisses des untergeordneten Moduls basierend auf einem Konfigurationsergebnis des vorderen beigeordneten Moduls des untergeordneten Moduls erlangt wird; und das untergeordnete Modul und das vordere beigeordnete Modul des untergeordneten Moduls mit demselben übergeordneten Modul assoziiert sind.

4. Verfahren nach einem der Ansprüche 1 bis 3, wobei das Wissenspaket des übergeordneten Moduls ferner einen internen Algorithmus des übergeordneten Moduls umfasst, und ein Teil des Konfigurationsergebnisses des übergeordneten Moduls erlangt wird, nachdem der interne Algorithmus des übergeordneten Moduls ausgeführt wurde.

5. Verfahren nach einem der Ansprüche 1 bis 4, wobei das Wissenspaket des übergeordneten Moduls ferner einen statistischen Satz des übergeordneten Moduls und einen Ausgabeschnittstellenalgorithmus des übergeordneten Moduls umfasst, der statistische Satz ein oder mehrere statistische Elemente umfasst, der Ausgabeschnittstellenalgorithmus verwendet wird, um Statistiken zu statistischen Daten jedes statistischen Elements des Konfigurationsergebnisses des übergeordneten Moduls zu sammeln, und das statistische Element eines oder mehrere der folgenden Elemente umfasst: einen Preis, ein Gewicht oder ein Volumen.

6. Verfahren nach Anspruch 4 oder 5, wobei das Wissenspaket des übergeordneten Moduls ferner einen Komponentensatz des übergeordneten Moduls umfasst, der Komponentensatz eine oder mehrere Komponenten umfasst und jede Komponente ein oder mehrere optionale Objekte des übergeordneten Moduls umfasst; und ein Ausführungsergebnis des Eingabeschnittstellenalgorithmus des übergeordneten Moduls und des internen Algorithmus des übergeordneten Moduls das Konfigurationsergebnis des übergeordneten Moduls ist, und das Konfigurationsergebnis ein Objekt jeder Komponente umfasst.

7. Verfahren nach Anspruch 6, wobei das Verfahren ferner Folgendes umfasst:
Erlangen einer Benutzeranforderung eines Benutzers für ein Produkt und Erlangen eines Wissenspakets jedes Moduls in dem Produkt aus der Konfigurationswissensdatenbank; und
Ausführen eines Algorithmus jedes Moduls basierend auf der Benutzeranforderung und dem Wissenspaket jedes Moduls und Bestimmen eines Konfigurationsergebnisses jedes Moduls, das die Benutzeranforderung erfüllt, wobei ein Algorithmus eines Moduls einen Eingabeschnittstellenalgorithmus, einen internen Algorithmus und einen Ausgabeschnittstellenalgorithmus umfasst.

8. Verfahren nach Anspruch 7, wobei das Verfahren ferner Folgendes umfasst:
Ausführen des internen Algorithmus des übergeordneten Moduls, um ein neues Konfigurationsergebnis entsprechend dem übergeordneten Modul zu erlangen, wenn der Benutzer das Konfigurationsergebnis des übergeordneten Moduls ändert;
Speichern eines vorherigen Ausführungsergebnisses des Eingabeschnittstellenalgorithmus des untergeordneten Moduls, bevor der Eingabeschnittstellenalgorithmus des untergeordneten Moduls ausgeführt wird;
Ausführen des Eingabeschnittstellenalgorithmus des untergeordneten Moduls, um ein aktuelles Ausführungsergebnis des Eingabeschnittstellenalgorithmus des untergeordneten Moduls zu erlangen; und
Vergleichen des aktuellen Ausführungsergebnisses mit dem vorherigen Ausführungsergebnis und, wenn das aktuelle Ausführungsergebnis dasselbe wie das vorherige Ausführungsergebnis ist, Überspringen der Ausführung des internen Algorithmus des untergeordneten Moduls, eines Algorithmus eines untergeordneten Moduls des untergeordneten Moduls und des Ausgabeschnittstellenalgorithmus des untergeordneten Moduls, und Ausführen eines Algorithmus eines hinteren beigeordneten Moduls des untergeordneten Moduls, wobei die Ausführung eines Eingabeschnittstellenalgorithmus des hinteren beigeordneten Moduls des untergeordneten Moduls durch das untergeordnete Modul ausgelöst wird oder durch das übergeordnete Modul ausgelöst wird.

9. Vorrichtung (800) zum Herstellen einer Konfigurationswissensbasis, umfassend:
eine Verarbeitungseinheit (810), die dazu konfiguriert ist: eine hierarchische Strukturbeziehung zwischen einer Vielzahl von Modulen basierend auf einer Produktfamilie, die Hardware- und/oder Softwareprodukte umfasst, zu bestimmen, wobei die hierarchische Strukturbeziehung eine hierarchische Beziehung zwischen einem übergeordneten Modul und einem untergeordneten Modul in der Vielzahl von Modulen angibt, und jedes übergeordnete Modul ein oder mehrere untergeordnete Module umfasst; und
ein Wissenspaket jedes der Vielzahl von Modulen basierend auf der hierarchischen Strukturbeziehung zu bestimmen, wobei ein Wissenspaket des übergeordneten Moduls einen Eingabeschnittstellenalgorithmus des untergeordneten Moduls umfasst, wobei das untergeordnete Modul mit dem übergeordneten Modul assoziiert ist, wobei sich der Eingabeschnittstellenalgorithmus des untergeordneten Moduls auf einen Algorithmus bezieht, dessen Ausführung durch ein anderes Modul ausgelöst werden muss und verwendet wird, um eine Beziehung zwischen einem übergeordneten Modul und einem untergeordneten Modul oder eine Beziehung zwischen untergeordneten Modulen auf derselben Ebene zu beschreiben; und
eine Freigabeeinheit (820), die dazu konfiguriert ist, das Wissenspaket jedes in der Produktfamilie enthaltenen Moduls an eine Konfigurationswissensbasis freizugeben, um eine Konfigurationswissensbasis der Produktfamilie zu erlangen.

10. Vorrichtung (800) nach Anspruch 9, wobei die Ausführung des Eingabeschnittstellenalgorithmus des untergeordneten Moduls durch das übergeordnete Modul, das mit dem untergeordneten Modul assoziiert ist, ausgelöst wird, und ein Teil eines Konfigurationsergebnisses des untergeordneten Moduls basierend auf einem Konfigurationsergebnis des übergeordneten Moduls, das mit dem untergeordneten Modul assoziiert ist, erlangt wird.

11. Vorrichtung (800) nach Anspruch 9 oder 10, wobei die Ausführung des Eingabeschnittstellenalgorithmus des untergeordneten Moduls durch ein vorderes beigeordnetes Modul des untergeordneten Moduls ausgelöst wird und ein Teil des Konfigurationsergebnisses des untergeordneten Moduls basierend auf einem Konfigurationsergebnis des vorderen beigeordneten Moduls des untergeordneten Moduls erlangt wird; und das untergeordnete Modul und das vordere beigeordnete Modul des untergeordneten Moduls mit demselben übergeordneten Modul assoziiert sind.

12. Computerlesbares Speichermedium, wobei das computerlesbare Speichermedium ein Computerprogramm speichert, und, wenn das Computerprogramm durch einen Prozessor ausgeführt wird, der Prozessor die Operationsschritte des Verfahrens nach einem der Ansprüche 1 bis 8 durchführt.

## Revendications

1. Procédé de création d'une base de connaissances de configuration, comprenant :
la détermination (S201) d'une relation de structure hiérarchique entre une pluralité de modules sur la base d'une famille de produits comprenant des produits matériels et/ou logiciels, dans lequel la relation de structure hiérarchique indique une relation hiérarchique entre un module parent et un module enfant dans la pluralité de modules, et chaque module parent comprend un ou plusieurs modules enfants ;
la détermination (S202) d'un paquet de connaissances de chacun de la pluralité de modules sur la base de la relation de structure hiérarchique, dans lequel un paquet de connaissances du module parent comprend un algorithme d'interface d'entrée du module enfant, le module enfant étant associé au module parent, dans lequel l'algorithme d'interface d'entrée du module enfant fait référence à un algorithme dont l'exécution doit être déclenchée par un autre module et est utilisé pour décrire une relation entre un module parent et un module enfant, ou une relation entre des modules enfants d'une même couche ; et
la diffusion (S203) du paquet de connaissances de chaque module compris dans la famille de produits dans une base de connaissances de configuration, pour obtenir une base de connaissances de configuration de la famille de produits.

2. Procédé selon la revendication 1, dans lequel l'exécution de l'algorithme d'interface d'entrée du module enfant est déclenchée par le module parent associé au module enfant, et une partie d'un résultat de configuration du module enfant est obtenue sur la base d'un résultat de configuration du module parent associé au module enfant.

3. Procédé selon la revendication 1 ou 2, dans lequel l'exécution de l'algorithme d'interface d'entrée du module enfant est déclenchée par un module frère avant du module enfant, et une partie d'un résultat de configuration du module enfant est obtenue sur la base d'un résultat de configuration du module frère avant du module enfant ; et le module enfant et le module frère avant du module enfant sont associés à un même module parent.

4. Procédé selon l'une quelconque des revendications 1 à 3, dans lequel le paquet de connaissances du module parent comprend également un algorithme interne du module parent, et une partie du résultat de configuration du module parent est obtenue après l'exécution de l'algorithme interne du module parent.

5. Procédé selon l'une quelconque des revendications 1 à 4, dans lequel le paquet de connaissances du module parent comprend également un ensemble statistique du module parent et un algorithme d'interface de sortie du module parent, l'ensemble statistique comprend un ou plusieurs éléments statistiques, l'algorithme d'interface de sortie est utilisé pour collecter des statistiques sur des données statistiques de chaque élément statistique du résultat de configuration du module parent, et l'élément statistique comprend l'un quelconque ou plusieurs des éléments suivants : un prix, un poids ou un volume.

6. Procédé selon la revendication 4 ou 5, dans lequel le paquet de connaissances du module parent comprend également un ensemble de composants du module parent, l'ensemble de composants comprend un ou plusieurs composants, et chaque composant comprend un ou plusieurs objets optionnels du module parent ; et un résultat d'exécution de l'algorithme d'interface d'entrée du module parent et de l'algorithme interne du module parent est le résultat de configuration du module parent, et le résultat de configuration comprend un objet de chaque composant.

7. Procédé selon la revendication 6, dans lequel le procédé comprend également :
l'obtention d'une exigence d'utilisateur d'un utilisateur pour un produit, et l'obtention d'un paquet de connaissances de chaque module dans le produit à partir de la base de connaissances de configuration ; et
l'exécution d'un algorithme de chaque module sur la base de l'exigence d'utilisateur et du paquet de connaissances de chaque module, et la détermination d'un résultat de configuration de chaque module qui répond à l'exigence d'utilisateur, dans lequel un algorithme d'un module comprend un algorithme d'interface d'entrée, un algorithme interne, et un algorithme d'interface de sortie.

8. Procédé selon la revendication 7, dans lequel le procédé comprend également :
l'exécution de l'algorithme interne du module parent pour obtenir un nouveau résultat de configuration correspondant au module parent lorsque l'utilisateur modifie le résultat de configuration du module parent ;
le stockage d'un résultat d'exécution précédent de l'algorithme d'interface d'entrée du module enfant avant que l'algorithme d'interface d'entrée du module enfant ne soit exécuté ;
l'exécution de l'algorithme d'interface d'entrée du module enfant, pour obtenir un résultat d'exécution actuel de l'algorithme d'interface d'entrée du module enfant ; et
la comparaison du résultat d'exécution actuel avec le résultat d'exécution précédent, et lorsque le résultat d'exécution actuel est le même que le résultat d'exécution précédent, l'ignorance de l'exécution de l'algorithme interne du module enfant, d'un algorithme d'un module enfant du module enfant, et de l'algorithme d'interface de sortie du module enfant, et l'exécution d'un algorithme d'un module frère arrière du module enfant, dans lequel l'exécution d'un algorithme d'interface d'entrée du module frère arrière du module enfant est déclenchée par le module enfant ou est déclenchée par le module parent.

9. Appareil (800) pour créer une base de connaissances de configuration, comprenant :
une unité de traitement (810), configurée pour : déterminer une relation de structure hiérarchique entre une pluralité de modules sur la base d'une famille de produits comprenant des produits matériels et/ou logiciels, dans lequel la relation de structure hiérarchique indique une relation hiérarchique entre un module parent et un module enfant dans la pluralité de modules, et chaque module parent comprend un ou plusieurs modules enfants ; et
déterminer un paquet de connaissances de chacun de la pluralité de modules sur la base de la relation de structure hiérarchique, dans lequel un paquet de connaissances du module parent comprend un algorithme d'interface d'entrée du module enfant, le module enfant étant associé au module parent, dans lequel l'algorithme d'interface d'entrée du module enfant fait référence à un algorithme dont l'exécution doit être déclenchée par un autre module et est utilisé pour décrire une relation entre un module parent et un module enfant, ou une relation entre des modules enfants d'une même couche ; et
une unité de diffusion (820), configurée pour diffuser le paquet de connaissances de chaque module compris dans la famille de produits dans une base de connaissances de configuration, pour obtenir une base de connaissances de configuration de la famille de produits.

10. Appareil (800) selon la revendication 9, dans lequel l'exécution de l'algorithme d'interface d'entrée du module enfant est déclenchée par le module parent associé au module enfant, et une partie d'un résultat de configuration du module enfant est obtenue sur la base d'un résultat de configuration du module parent associé au module enfant.

11. Appareil (800) selon la revendication 9 ou 10, dans lequel l'exécution de l'algorithme d'interface d'entrée du module enfant est déclenchée par un module frère avant du module enfant, et une partie du résultat de configuration du module enfant est obtenue sur la base d'un résultat de configuration du module frère avant du module enfant ; et le module enfant et le module frère avant du module enfant sont associés à un même module parent.

12. Support de stockage lisible par ordinateur, dans lequel le support de stockage lisible par ordinateur stocke un programme informatique, et lorsque le programme informatique est exécuté par un processeur, le processeur réalise les étapes opératoires du procédé selon l'une quelconque des revendications 1 à 8.
